# EUROPÄISCHE PATENTSCHRIFT

(11) **EP 2 163 518 B1**
(45) Veröffentlichungstag und Bekanntmachung des Hinweises auf die Patenterteilung: **14.11.2012**
(21) Anmeldenummer: 08021667.4
(22) Anmeldetag: 12.12.2008
(51) Int. Cl.: C01B 31/22, B24C 1/00, B24C 5/04

(54) **Vorrichtung und Verfahren zum Erzeugen von Trockeneisschnee**
Device and method for creating dry ice snow
Dispositif et procédé destinés à la production de glace sèche

(30) Priorität: 15.09.2008 DE 102008047432
(43) Veröffentlichungstag der Anmeldung: 17.03.2010
(73) Patentinhaber: Linde AG, 80331 München (DE)
(72) Erfinder: Schmand, Ralf, 85716 Unterschleißheim (DE); Hauner, Matthias, 38165 Lehre (DE); Blanke, Martin, 85521 Riemerling (DE)
(74) Vertreter: Schüssler, Andrea

(56) Entgegenhaltungen:
- WO-A-96/01168
- US-A- 4 389 820
- US-A- 4 780 119
- US-A- 5 203 794
- US-A- 5 475 981
- US-B1- 6 174 225
- US-B1- 6 626 737

## Beschreibung

Die vorliegende Erfindung betrifft ein Verfahren und eine Vorrichtung zum Erzeugen von Trockeneisschnee, sowie ein Verfahren und eine Vorrichtung zum Reinigen von Gegenständen mittels eines Trockeneisschneestrahls, insbesondere CO₂-Schneestrahl bzw. CO₂-Partikelstrahl.

Zum Reinigen der Oberflächen von Gegenständen im industriellen Bereich sind unterschiedlichste chemische und physikalische Reinigungsverfahren und Möglichkeiten bekannt.

Chemische Reinigungsverfahren erfordern aufgrund der dort verwendeten oft aggressiven Mittel und aufgrund gesetzlicher Vorschriften einen hohen Aufwand an Sicherheits- und Entsorgungseinrichtungen. Daher ist es bei den physikalischen Reinigungsverfahren, bei denen die Verunreinigungen in der Regel durch Beschuss oder Bestrahlung der zu reinigenden Oberfläche mit Sand-, Metall- oder Glaspartikeln entfernt werden, erforderlich, dass das Reinigen selbst in gesonderten Kabinen durchgeführt wird. Hierfür muss das zu reinigende Bauteil zunächst aus der entsprechenden Maschine ausgebaut und in eine solche Kabine eingelegt werden.

Eine weitere Alternative besteht darin, Bauteile mittels Beschuss durch Trockeneis zu reinigen. Beim Trockeneis handelt es sich um in den festen Aggregatzustand überführtes und auf mindestens -78,5°C gekühltes Kohlendioxid. Trockeneis geht unter Atmosphärendruck unmittelbar vom festen Aggregatzustand in den gasförmigen über, wobei keine Schmelzflüssigkeit entsteht. Dadurch kann auf besonders einfache Weise, nämlich mit normaler Druckluft, sowohl der Beschuss mit Trockeneis als auch die Absaugung und Abfuhr der Schmutzpartikel erfolgen.

Trockeneis liegt bei der Produktion in Form von Schnee vor. Die Erzeugung von CO₂-Schnee vor Ort mittels einer Düse aus flüssigem CO₂ und die direkte Bestrahlung einer Oberfläche mit diesem Schnee, ggf. mit Unterstützung von Druckluft, ist verfahrenstechnisch vergleichsweise einfach zu handhaben und leicht zu automatisieren.

Nach dem Stand der Technik, wie er etwa aus der EP 1 501 655 B1 bekannt ist, wird zur Herstellung von CO₂-Schnee und Einleitung desselben in einen Trägergasstrom flüssiges CO₂ über eine Zuleitung unter Druck in einen Entspannungsraum geleitet, der einen beträchtlich größeren Querschnitt als die Zuleitung aufweist. Als ein Beispiel weist die Zuleitung einen Innendurchmesser von 3 mm auf, während eine erste Kammer des Entspannungsraums einen Durchmesser von 20 mm und eine Länge von 85 mm aufweist. An die erste Kammer schließt sich stromabwärts nach einer kurzen konischen Aufweitung eine zweite Kammer des Entspannungsraums mit einen Innendurchmesser von 32 mm und einer Länge von 105 mm an. Die zweite Kammer mündet in einen Abzweig mit einem Innendurchmesser von 39 mm, der unter einem Winkel von 45° mit dem Strom in eine Strahlleitung mündet, in welcher ein Trägergas zu einer Strahldüse strömt. In dem Entspannungsraum bildet sich aus dem flüssigen CO₂ aufgrund schlagartiger Entspannung CO₂-Schnee, der von dem Abzweig aus mit dem Trägergas mitgerissen wird und über die Strahldüse auf einen zu reinigenden Gegenstand gerichtet wird. In der zweistufigen Entspannungskammer können sich die CO₂-Schneepartikel zu Körnern einer gewünschten Masse zusammenfügen (Agglomeration).

Die Entspannung des flüssigen CO₂ zu CO₂-Schnee und die (erwünschte) Agglomeration desselben bedarf einer gewissen Zeit. Daher muss der Entspannungsraum, der den wesentlichen baulichen Teil einer Trockeneis-Erzeugungsvorrichtung ausmacht, eine gewisse Länge aufweisen. Diese kann je nach Einsatzbedingungen beträchtlich groß werden, wie das vorstehend genannte Beispiel mit einer Gesamtlänge von 190 mm zeigt, und sich störend auf die Gesamtkonstruktion einer Trockeneisschneestrahlvorrichtung auswirken.

Neben einer erwünschten Agglomeration bei der Erzeugung des CO₂-Schnees kommt es beim CO₂-Schneestrahlen auch zu unerwünschten Agglomerationserscheinungen. So kommt es durch Agglomeration von CO₂-Schnee nach der CO₂-Schneedüse immer wieder zu einem gehäuften, nicht vorhersagbaren Austritt von CO₂-Schnee, wodurch das Strahlbild unregelmäßig und die Strahldichte erratisch schwankend ist und zu einem ungleichmäßigen Ergebnis führt. Hierdurch wird die Reinigungswirkung schwer vorhersagbar und insgesamt beeinträchtigt, was zum Teil durch einen höheren Einsatz an Trockeneis und/oder Druckgas ausgeglichen werden muss.

In der DE 10 2005 005638 B3 wird eine seitliche Zuführung von CO₂-Schnee über eine Agglomerationskammer vorgeschlagen, wobei der CO₂-Schnee unter einem Winkel von 90° in eine Mischkammer mündet, und zwar stromaufwärts einer Mündung eines Strahlrohres, das eine gewisse Strecke in die Mischkammer hineinragt. Hierdurch wird eine gute Verwirbelung des durch das Strahlrohr zugeführten Trägergases mit dem CO₂-Schnee erreicht. Auch hier ist die Expansions- und Agglomerationskammer von beträchtlicher Länge und ragt noch seitlich ab, was die Handhabung der Gesamtvorrichtung erschwert. Auch hier kann es zur unerwünschten Agglomeration des erzeugten CO₂-Schnees an der Strahlöffnung kommen.

Zum Verdichten des CO₂-Schnees zu Partikeln gewünschter Masse schlägt die DE 199 500 16 A vor, Prallflächen in bzw. nach der Expansionskammer in den Strom einzubauen, an welchen sich CO₂-Schnee durch Agglomeration zu größeren Körnern verdichten kann. An der Gesamtlänge der Expansions- und Agglomerationskammer ändert dies jedoch nichts, ebenso wenig an dem Problem einer Nachagglomeration am Strahlaustritt.

Die US 4,389,820 offenbart eine Vorrichtung zum Herstellen von Trockeneis-Pellets und zum Bestrahlen von Gegenständen mit solchen Trockeneis-Pellets. Diese Vor richtung umfasst einen Tank für flüssiges CO₂, aus dem flüssiges CO₂ abgezogen und sowohl einer Pelletiereinrichtung als auch einer Verdampfungseinrichtung zugeführt wird. In der Pelletiereinrichtung wird das flüssige CO₂ zu Trockeneisschnee umgewandelt und dann mittels sich drehender Pelletierrollen in kleine Hohlräume eines Formwerkzeuges (Matrize) gepresst. Die Hohlräume sind Durchgangsbohrungen in welchen der CO₂-Schnee zu Trockeneis-Pellets gepresst wird. Gegenüber den Ausgängen der Durchgangsbohrungen sind mit etwas Abstand Stifte angeordnet, die aus den Durchgangsbohrungen heraustretenden Pellets ablenken, wodurch die Pellets in einer vorbestimmten Länge abbrechen und für die weitere Bearbeitung zur Verfügung stehen. Diese Pellets werden dann einem sogenannten Airlock zugeführt. Dieses Airlock weist eine rotierende Scheibe auf, die entlang einer Kreislinie nebeneinander angeordnete Durchgangsbohrungen aufweist. Es ist eine Zuführleitung vorgesehen, die an einer bestimmten Stelle fluchtend zu den Durchgangsbohrungen der rotierenden Scheibe angeordnet ist. Eine Abführleitung ist an einer anderen Stelle fluchtend zu den Durchgangsbohrungen angeordnet. Mittels der Zuführleitungen werden die Pellets den Durchgangsbohrungen zugeführt und darin gesammelt. Durch das Drehen der Scheibe werden die mit Pellets gefüllten Durchgangsbohrungen in die zur Abführleitung fluchtende Position gebracht. Dort werden die Pellets mittels Gas aus den Durchgangsbohrungen herausbefördert. Mittels der Drehgeschwindigkeit soll die Menge an abgegebenen Pellets eingestellt werden. Je schneller sich die Scheibe dreht, desto mehr Pellets werden abgegeben. Dieser Pelletsstrom wird dann mit einem weiteren Gasstrom verdünnt und durch eine Düse abgestrahlt.

In der US 6,626,737 B1 ist eine Vorrichtung zum Erzeugen von festen Trockeneispartikeln beschrieben. Diese Vorrichtung weist eine sich drehende Scheibe auf, an deren Oberfläche vorstehende Zähne ausgebildet sind. Mit diesen Zähnen werden von Blöcken von Trockeneis Partikel abgeschabt, die durch Löcher in der Scheibe fallen und über einen Trichter einer Leitung zugeführt werden. In dieser Leitung werden die Trockeneispartikel zur Bestrahlung von Gegenständen einer Düse zugeführt.

Aus der US 5,47,981 geht eine Vorrichtung zum Erzeugen von Trockeneispellets hervor, bei welcher flüssiges Kohlendioxid in einer Kolbenzylindereinheit zu festem Trockeneis komprimiert wird. Der Zylinder weist an einer Stirnseite kleine Öffnungen auf, aus welchen das Trockeneis, ähnlich einem Extruder als Pellets herausgedrückt wird.

In der US 6,174,225 B1 wird eine Vorrichtung zum Erzeugen von kleinen Trockeneispellets beschrieben. Trockeneisstücke werden hierbei mittels einer Mühle in kleine Pellets gemahlen und einer Sprühpistole zugeführt. Die Mühle kann eine Messer - oder Scheiben-Mühle sein.

Aus der US 5,203,794 geht eine Vorrichtung zum Bestrahlen mittels Trockeneispartikeln hervor. Die Trockeneispartikel werden mittels einer Venturidüse 22 einem Luftstrom zugeführt, wobei der Luftstrom die Trockeneispartikel in einer Leitung in Richtung zu einer Ausgabedüse mitnimmt. Kurz vor der Ausgabedüse ist ein Rohrabschnitt angeordnet, der von mehreren Schneidklingen durchsetzt ist, die die Trockeneispartikel in kleinere Trockeneispartikel schneiden. An der Ausgangsdüse kann ein weiterer Luftstrom zugeführt werden, um die Partikel weiter zu beschleunigen.

In der WO 96/01168 A1 ist eine Vorrichtung zum Erzeugen von CO₂-Granulat beschrieben. Diese Vorrichtung weist Schneidmesser auf, die auf einer Trägerplatte angeordnet sind und entlang Blöcken aus CO₂ bewegt werden, so dass durch die Schneidmesser aus den CO₂-Blöcken CO₂-Körner geschnitten werden. Diese CO₂-Körner werden direkt einer Förderleitung zugeführt, in welcher sie in einem Gasstrom beschleunigt werden, um in einer Düse auf einen Gegenstand abgestrahlt zu werden.

In der US 4,780,189 ist eine Vorrichtung zum Erzeugen von festem CO₂ in Form von Scheiben offenbart. Hierbei wird flüssiges CO₂ in einer Kammer entspannt, wodurch CO₂-Schnee entsteht. Der CO₂-Schnee wird einem Extrusionszylinder zugeführt, in dem er mittels eines Extrusionskolbens in eine ortsfeste Form gepresst wird, so dass aus dem Schnee Pellets entstehen. Die Pellets werden einem Formzylinder zugeführt, in dem mehrere Pellets zu jeweils einer Scheibe zusammengepresst werden.

Aufgabe der Erfindung ist es, die Nachteile des Stands der Technik zu vermeiden.

Insbesondere ist es Aufgabe der Erfindung, ein Verfahren und eine Vorrichtung zur Herstellung von Trockeneisschnee anzugeben, mit welchen ein Strahlbild mit unregelmäßiger Strahldichte vermieden wird.

Eine weitere Aufgabe der Erfindung besteht darin, ein Verfahren und eine Vorrichtung zur Reinigung von Gegenständen mittels Trockeneisschnee anzugeben, die eine verbesserte Reinigungswirkung und einen verringerten Materialverbrauch aufweisen.

Eine weitere Aufgabe der Erfindung besteht darin, ein Verfahren und eine Vorrichtung zur Herstellung von Trockeneisschnee anzugeben, mit welchen die Baulänge einer Expansions- und/oder Agglomerationseinrichtung, die Teil einer solchen Vorrichtung ist, verkürzt werden kann und eine insgesamt kompaktere und weniger sperrige Trockeneisschneestrahlvorrichtung hergestellt werden kann.

Die Aufgaben werden durch ein Verfahren gemäß Anspruch 1 oder 6 bzw. eine Vorrichtung gemäß Anspruch 7 oder 19 gelöst. Vorteilhafte Ausführungsformen und Weiterentwicklungen der Erfindung bilden den Gegenstand der Unteransprüche.

Nach der Erfindung wird flüssiges CO₂ zugeführt und derart expandiert, dass ein Gemisch von CO₂-Gas und CO₂-Schnee entsteht, wobei der CO₂-Schnee in Tranchen vorbestimmter Menge mit vorgegebener Frequenz erzeugt und abgegeben wird.

Durch die Erfindung wird der unregelmäßige Strahl in einen gleichbleibend pulsierenden Strahl umgewandelt. Die vorbestimmte Frequenz überlagert und beseitigt erratische Schwankungen der Strahldichte. Es wird eine klare, definierte Trennung von Materiepulsen definierter kinetischer Energie erzeugt, die in ihrer Wirkung gut beherrschbar und vorhersagbar sind. Durch den harten Übergang Schnee - kein Schnee - Schnee - kein Schnee u.s.w. werden am zu reinigenden Gegenstand getrennte Aufprallfronten erzeugt, die die Reinigungswirkung des Strahls steigern und eventuell an der Strahldüsen anhaftende Schneepartikel mitreißen können.

Vorzugsweise wird flüssiges CO₂ einer rotierenden Trommel zugeführt, die eine Anzahl von auf ihrem Umfang verteilten, voneinander abgeteilten Expansionskammern aufweist und in eine Ableitung für CO₂-Schnee mündet. Aufgrund der Abteilung der Expansionskammern voneinander kann jeweils eine Tranche von flüssigem CO₂ in einer Expansionskammer zu CO₂- Schnee expandieren und wird dann, ebenfalls in definierten Tranchen, in die Ableitung abgegeben. Da die Expansionskammern einen kreisbogenförmigen Weg zurücklegen, kann die Gesamtbaulänge einer Expansionseinrichtung verkürzt werden.

Gemäß einer Ausgestaltung der Erfindung wird die Trommel durch einen Fremdantrieb extern angetrieben. Hierdurch kann eine gleichbleibende Frequenz erzwungen und auf einem vorbestimmten Wert aufrechterhalten werden. Die Drehzahl des Fremdantriebs kann fest vorgebbar oder im Betrieb einstellbar sein.

Gemäß einer weiteren Ausgestaltung nimmt das Volumen der Expansionskammern von der Einmündung von flüssigem CO₂ in die Trommel bis zur Ableitung des CO₂-Schnees zu und danach wieder ab. Nach der ersten, schlagartigen Expansion des unter Druck zugeführten flüssigen CO₂ an der Einmündung in die Expansionskammer erfährt das entstandene Gemisch aus CO₂-Schnee und CO₂-Gas so eine weitere, erzwungene Expansion. Dadurch kann die Schneebildung intensiviert und optimiert werden. Des Weiteren ist bei einer solchen Ausgestaltung kein externer Antrieb der Trommel erforderlich, da die Expansion selbst die Trommel nach der Art einer Umlaufverdrängermaschine antreibt.

Die Volumenveränderlichkeit der Expansionskammern kann durch exzentrische Lagerung der Trommelnabe derart, dass deren Achse parallel zu der Achse des zylindrischen Innenraums des Gehäuses zu der Eintrittsöffnung hin versetzt ist, und eine Anordnung in der Nabe radial beweglich gehaltener, vorzugsweise in Richtung radial nach außen vorgespannter Kammerzwischenwände erzielt werden.

Die Volumenveränderlichkeit der Expansionskammern kann alternativ dadurch erzielt werden, dass wenigstens eine Stirnseite jeder Expansionskammern durch ein zwischen zwei Zwischenwänden eingesetztes Scheibensegment definiert ist, wobei das Scheibensegment auf der radial inneren Seite axial frei beweglich gelagert ist und auf der radial äußeren Seite in der zylindrischen Innenwand des Gehäuses ausgebildeten, für die Scheibensegmente der einen Seite aller Expansionskammern gemeinsamen Ringnut geführt ist, und wobei eine Führungsebene der Ringnut bezüglich einer Ebene senkrecht zu der Achse des zylindrischen Innenraums des Gehäuses einen Winkel derart aufweist, dass die Expansionskammer im Laufe ihres Umlaufs auf Höhe der Einlassöffnung eine geringere axiale Breite als auf Höhe der Auslassöffnung aufweist.

Zur Verhinderung eines Anlagerns von CO₂-Schnee in den Expansionskammern kann am Ort der Ableitung ein Druckgas, etwa CO₂ oder Druckluft, in die Expansionskammern eingeblasen werden.

Weitere Aufgaben, Merkmale und Vorteile der vorliegenden Erfindung werden aus der nachstehenden Beschreibung der Ausführungsbeispiele ersichtlich, die in den beigefügten Zeichnungen dargestellt sind.

Fig. 1 zeigt eine Trockeneisschnee-Erzeugungseinrichtung als ein erstes Ausführungsbeispiel der Erfindung in einer Radialschnittansicht.

Fig. 2 zeigt eine Trockeneisschnee-Erzeugungseinrichtung als ein zweites Ausführungsbeispiel der Erfindung in einer Radialschnittansicht.

Fig. 3 zeigt eine Trockeneisschnee-Erzeugungseinrichtung als ein drittes Ausführungsbeispiel der Erfindung in einer Radialschnittansicht.

Fig. 4 zeigt die Trockeneisschnee-Erzeugungseinrichtung aus Fig. 3 in einer Axialschnittansicht von oben.

Fign. 5A bis 5D zeigen Einzelheiten eines Läufers der Trockeneisschnee-Erzeugungseinrichtung aus Fig. 3 und Abwandlungen hiervon.

Fig. 6 zeigt eine Trockeneisschneestrahl-Reinigungsvorrichtung als ein viertes Ausführungsbeispiel der Erfindung in einer Schnittansicht.

Es folgt eine Beschreibung der derzeit bevorzugten Ausführungsbeispiele im Einzelnen.

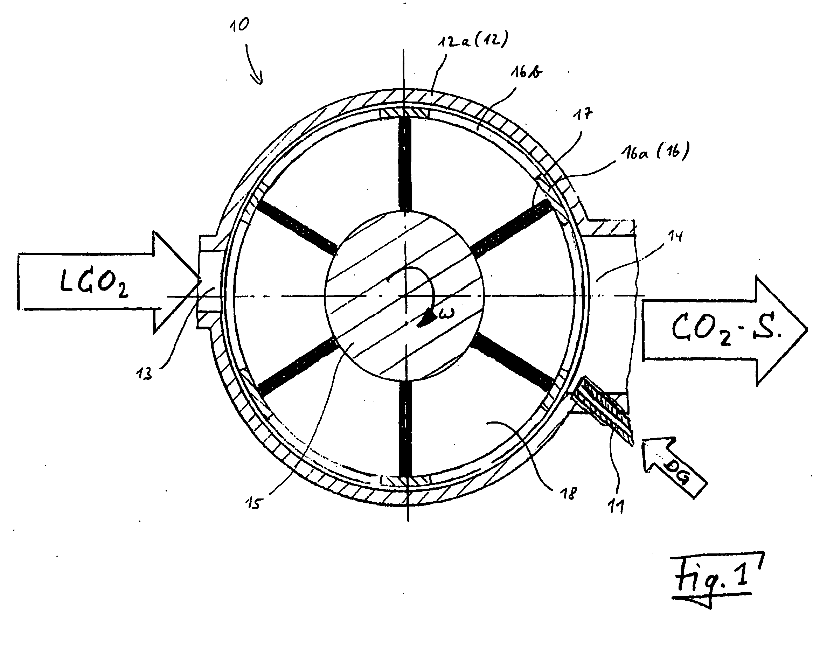

In Fig. 1 ist eine Trockeneisschnee-Erzeugungseinrichtung 10 gemäß einem ersten Ausführungsbeispiel der vorliegenden Erfindung in einer Radialschnittansicht dargestellt.

Die Trockeneisschnee-Erzeugungseinrichtung 10 weist ein allgemein hohlzylindrisches Gehäuse 12 mit einer Eintrittsöffnung 13 und einer Austrittsöffnung 14, die jeweils in dem zylindrischen Wandteil 12a des Gehäuses 12 vorgesehen sind, auf. An der Eintrittsöffnung 13 ist eine nicht näher dargestellte Zuführung für flüssiges CO₂ angeschlossen. In der Figur ist die Zuführung durch einen Pfeil "LCO₂" symbolisiert. Die Eintrittsöffnung 13 weist geeignete, in der Zeichnung nicht näher dargestellte Mittel zum Anschließen der LCO₂-Zuführung wie etwa eine Verdickung in der Gehäusewandung, ein dort ausgebildetes Innen- und/oder Außengewinde zum Anbringen eines Rohranschluss-Stücks, ggf. mit einer Überwurfmutter, oder eine Knebelverschlussvorrichtung oder dergleichen, Dichtflächen, Dichtkörper etc. auf.

In der Zylinderwandung 12a des Gehäuses 12 ist die Austrittsöffnung 14 auf dem Umfang in etwa gegenüberliegend der Eintrittsöffnung 13 vorgesehen. Die Austrittsöffnung 14 mündet in einen nicht näher dargestellten Abnehmer für CO₂-Schnee wie etwa eine Trägergasleitung, die stromabwärts in eine Schneestrahldüse übergeht. Die Abnahme des CO₂-Schnees ist in der Figur durch einen Pfeil "CO₂-S." symbolisiert.

In dem Gehäuse 12 ist eine Nabe 15 gelagert, die über nicht näher dargestellte Antriebsmittel mit einer Winkelgeschwindigkeit "ω" antreibbar ist. Auf der Nabe 15 ist ein Käfig 16 fest angebracht, dessen Innenraum mittels sich in radialer und achsenparalleler Richtung zwischen der Nabe 15 und einer zylindrischen Außenwand 16a des Käfigs 16 erstreckende Zwischenwände 17 in sechs über den Umfang verteilte Expansionskammern 18 unterteilt ist. Die Außenwand 16a weist für jede Expansionskammer 18 eine Öffnung 16b auf, die im Querschnitt in etwa der Austrittsöffnung 14 entspricht. In jedem Fall weist die Öffnung 16b einen deutlich größeren Querschnitt als die Eintrittsöffnung 13 auf.

Die Zwischenwände 17 sind mit der Nabe 15 und dem Käfig 16 jedenfalls in Umfangsrichtung fest verbunden. Nicht dargestellt sind Verbindungsmittel zwischen den Zwischenwänden 17 und der Nabe 15 einerseits und dem Käfig 16 andererseits. Es kann sich um Verschweißungen oder um Steckverbindungen handeln.

Im Bereich der Austrittsöffnung 14 ist eine Ausblaseinrichtung 11 vorgesehen, welche ein Druckgas "DG" wie etwa Druckluft oder CO₂-Gas in die Expansionskammer hinein abgibt.

Die Funktionsweise der Trockeneisschnee-Erzeugungseinrichtung 10 ist wie folgt.

Über die Eintrittsöffnung 13 und die Öffnung 16b in der Wandung 16a des Käfigs 16 gelangt flüssiges CO₂ (LCO₂) aus einer nicht näher dargestellten Zuleitung in eine Expansionskammer 18. Durch die abrupte Querschnittsvergrößerung im Bereich der Eintrittsöffnung 13 erfolgt eine schlagartige Expansion des CO₂ mit Bildung von Schnee.

Die Expansionskammer 18 wandert sodann mit Drehung der Nabe 15 in Richtung des Pfeils "ω"auf die Seite der Auslassöffnung 14, wo der gebildete Schnee (CO₂-S.) in einem Gemisch mit CO₂-Gas die Expansionskammer 18 durch die Öffnung 16b verlässt. Durch das mittels der Ausblaseinrichtung 11 eingeblasene Druckgas wird die Expansionskammer 18 zuverlässig von anhaftenden Schneepartikeln befreit.

Auf dem Weg von der Eintrittsöffnung 13 zu der Austrittsöffnung 14 hat das in der Expansionskammer 18 befindliche CO₂ ausreichend Zeit, zu kristallisieren und gegebenenfalls zu Partikeln gewünschter Masse anzuwachsen. Durch die Anordnung rotierender Kammern wird der entstehende CO₂-Schnee in Tranchen vorbestimmter Menge mit vorgegebener Frequenz erzeugt und in einen Trägergasstrom (nicht näher dargestellt) abgegeben. Dabei ist die Frequenz durch die Rotationsgeschwindigkeit ω vorgegeben.

In einer nachgeschalteten Trockeneisschnee-Reinigungsdüse (nicht näher dargestellt), in welcher die Trockeneisschnee-Erzeugungseinrichtung verwendet werden kann, wird daher ein gleichbleibend pulsierender Strahl erzeugt. Die vorbestimmte Frequenz überlagert und beseitigt unregelmäßige Dichteschwankungen des Strahls, da sich in den einzelnen Tranchen keine Unterschiede aufbauen können. Es wird eine klare, definierte Trennung von Materiepulsen definierter kinetischer Energie erzeugt, die in ihrer Wirkung gut beherrschbar und vorhersagbar sind. Durch den harten Übergang Schnee - kein Schnee - Schnee - kein Schnee u.s.w. werden am zu reinigenden Gegenstand getrennte Aufprallfronten erzeugt, die die Reinigungswirkung des Strahls steigern und eventuell an der Düse anhaftende Schneepartikel unmittelbar beseitigen können.

Die bogenförmige Führung der Expansionskammern verkürzt die Baulänge der Trockeneisschnee-Erzeugungseinrichtung um näherungsweise den Faktor 1/π.

Die Öffnung 16b in der Trommelwand 16a kann in einer Abwandlung dieses Ausführungsbeispiels einen geringeren Querschnitt als die Austrittsöffnung 14 aufweisen, um durch diese erneute abrupte Querschnittsvergrößerung eine Nachexpansion zu ermöglichen.

In einer weiteren Abwandlung kann die Öffnung 16b einen Querschnitt aufweisen, der sich von innen nach außen vergrößert. Hierdurch können die Strömungsverhältnisse optimiert werden.

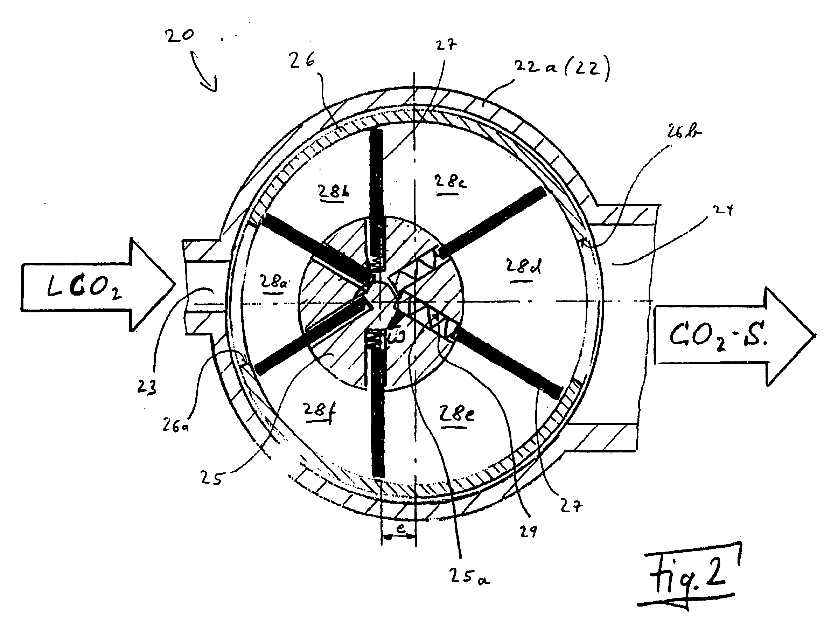

In Fig. 2 ist eine Trockeneisschnee-Erzeugungseinrichtung 20 gemäß einem zweiten Ausführungsbeispiel der vorliegenden Erfindung in einer Radialschnittansicht dargestellt.

Wie die Trockeneisschnee-Erzeugungseinrichtung 10 weist die Trockeneisschnee-Erzeugungseinrichtung 20 ein allgemein hohlzylindrisches Gehäuse 22 mit einer Eintrittsöffnung 23 für flüssiges CO₂ und einer Austrittsöffnung 24 zur Abgabe von CO₂-Schnee auf, die jeweils in der zylindrischen Wandung 22a des Gehäuses 22 vorgesehen sind. Anordnung und Zweck dieser Bauelemente entsprechen denjenigen in dem ersten Ausführungsbeispiel der vorliegenden Erfindung; zur Vermeidung von Wiederholungen wird auf die dortigen Ausführungen Bezug genommen.

In dem Gehäuse 22 ist eine Nabe 25 gelagert, die aber, anders als bei dem ersten Ausführungsbeispiel, um einen Abstand "e" (in der Zeichnung nach links) bezüglich der Zylinderachse des Gehäuses 22 zu der Eintrittsöffnung hin versetzt angeordnet ist. Die Nabe 25 weist sechs sich in Längsrichtung erstreckende Sitznuten 25a mit einer Tiefe, die mindestens dem Abstand e entspricht auf, in welchen jeweils eine Zwischenwand 27 aufgenommen ist, die mittels einer Feder 29 nach außen vorgespannt sind. Die Zwischenwände 27 werden dabei gegen eine Gleitbüchse 26 gedrückt, die in die Innenwand der Gehäusewandung 22a drehfest eingesetzt ist und am Ort der Einlassöffnung 23 und der Auslassöffnung 24 jeweils einen Durchbruch 26a, 26b aufweist.

Durch die Zwischenwände 27 werden sechs über den Umfang verteilte Expansionskammern 18a-18f definiert. Dabei befindet sich im dargestellten Zustand die Expansionskammer 18a auf der Seite der Exzentrizität (in der Zeichnung links). Sie wird durch die Gehäusewand 22a, die Nabe 25 und zwei Zwischenwände 27, die am weitesten in die Sitznuten 25a hineingedrückt sind, begrenzt und weist von allen Expansionskammern das kleinste Volumen auf. Demgegenüber befindet sich die Expansionskammer 18d auf der gegenüberliegenden Seite der Exzentrizität (in der Zeichnung rechts). Sie wird durch die Gehäusewand 22a, die Nabe 25 und zwei Zwischenwände 27, die am weitesten aus den Sitznuten 25a herausragen, begrenzt und weist von allen Expansionskammern das größte Volumen auf.

Dreht sich die Nabe 25 mit einer Winkelgeschwindigkeit ω, so gleiten die Zwischenwände 27 in Umfangsrichtung an der Innenseite der Gleitbüchse 26 entlang, wobei ihre Eintauchtiefe in den Sitznuten 25a durch den momentanen radialen Abstand zwischen der Nabe 25 und der Gleitbüchse 26 bestimmt ist. Die Expansionskammern 18a-18f ändern während des Umlaufs ihr Volumen, wie es in Fig. 2 ersichtlich ist. Insbesondere ist das Volumen der Expansionskammer 18a, die sich auf der Seite der Eintrittsöffnung 23 befindet, im dargestellten Zeitpunkt am kleinsten und vergrößert sich über einen halben Umlauf der Nabe, bis sie auf der Seite der Austrittsöffnung 24 das größte Volumen annimmt (hier Kammer 18d). Mit weiterem Umlauf verkleinert sich das Volumen wieder, bis die Kammer auf der Seite der Eintrittsöffnung angekommen ist.

Die Funktionsweise der Trockeneisschnee-Erzeugungseinrichtung 20 entspricht hinsichtlich der grundlegenden Merkmale derjenigen der Trockeneisschnee-Erzeugungseinrichtung 10 des ersten Ausführungsbeispiels. Insbesondere erfolgt eine sprunghafte Expansion des einströmenden flüssigen CO₂ an der Eintrittsöffnung, kann der entstehende CO₂-Schnee während eines Umlaufs auf gewünschte Korngröße anwachsen und verlässt die Austrittsöffnung als gleichmäßig pulsierender Strahl.

Durch die exzentrische Anordnung der Nabe mit den größenveränderlichen Expansionskammern wird das hierdurch erzeugte Gemisch aus CO₂-Gas und CO₂-Schnee bei dem hier beschriebenen Ausführungsbeispiel jedoch einer weiteren, zwangsweisen Expansion unterworfen. Hierdurch wird die Schneebildung intensiviert und optimiert. Nach Art eines Flügelzellen-Druckgasmotors erhält der Läufer (die Nabe) 25 aus dieser Zwangsexpansion ein Antriebsmoment. D.h., die Trockeneisschnee-Erzeugungseinrichtung 20 benötigt keinen eigenen Antrieb, sondern erhält ihre Rotation selbsttätig, wie eine Umlaufverdrängermaschine aufrecht.

Die federnde Vorspannung der Zwischenwände 27 in dem zweiten Ausführungsbeispiel ist im laufenden Betrieb der Vorrichtung eigentlich nicht erforderlich, da die Zwischenwände 27 auch allein durch die Fliehkraft nach außen gedrückt werden, wenn die Vorrichtung einmal in Betrieb ist. Bei einem reinen Gasmotor nach dem Flügelzellenprinzip wird auch meist darauf verzichtet. Um ein Blockieren der Zwischenwände 27 durch anhaftenden Schnee zu verhindern und auch, um im Ruhezustand eine definierte Lage der Zwischenwände 27 zu gewährleisten, ist die federnde Vorspannung in der hier beschriebenen Anwendung jedoch vorzuziehen.

In einer Abwandlung dieses Ausführungsbeispiels kann die Gleitbüchse 26 weggelassen werden, wenn die Innenseite der Gehäusewand 22a ausreichend glatt hergestellt ist, um eine rasche Abnutzung der an ihr entlanggleitenden Zwischenwände 27 zu verhindern.

In einer weiteren Abwandlung können die Zwischenwände 27 des zweiten Ausführungsbeispiels mittels etwa scheibensegmentförmigen Stützelementen, die auf der Nabe 25 fest angebracht sind, oder mittels stirnseitig an der Nabe 25 angebrachte Führungselemente wie z.B. eine Scheibe mit Radialnuten oder dergleichen, in Umfangsrichtung gestützt werden, sodass Instabilitäten insbesondere in der ganz ausgefahrenen Position vermieden werden.

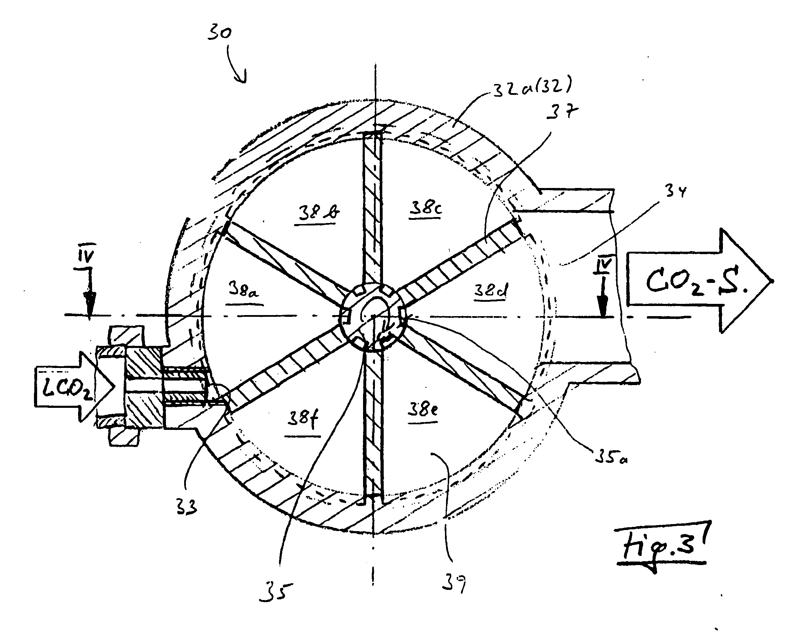

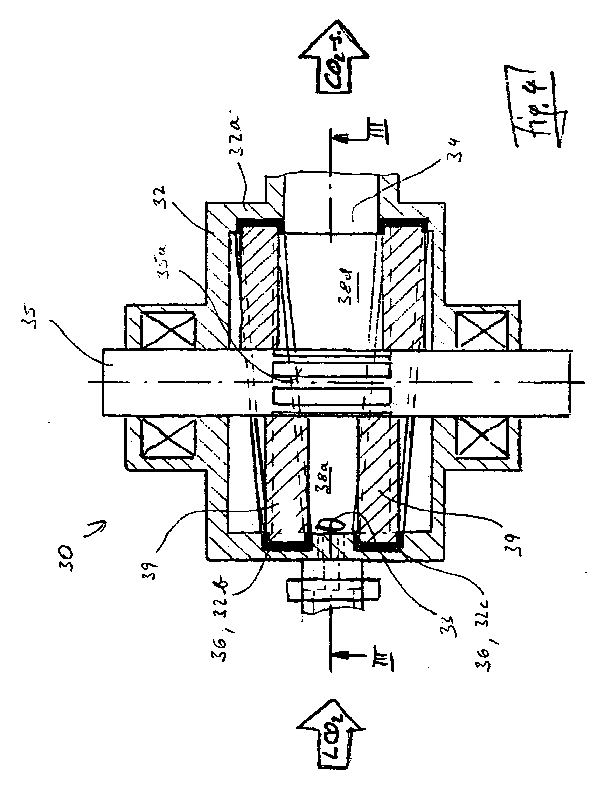

In Fign. 3 und 4 ist eine Trockeneisschnee-Erzeugungseinrichtung 30 gemäß einem dritten Ausführungsbeispiel der vorliegenden Erfindung in zwei Ansichten dargestellt. Dabei ist Fig. 3 eine Radialschnittansicht wie die Fign. 1 und 2, während Fig. 4 eine Draufsicht im Schnitt entlang einer Linie IV-IV in Fig. 3 ist. In Fig. 4 ist der Schnitt, welcher der Darstellung der Fig. 3 entspricht, mit einer Linie III-III angedeutet.

Wie die Trockeneisschnee-Erzeugungseinrichtung 10 weist die Trockeneisschnee-Erzeugungseinrichtung 30 ein allgemein hohlzylindrisches Gehäuse 32 mit einer Eintrittsöffnung 33 für flüssiges CO₂ und einer Austrittsöffnung 34 zur Abgabe von CO₂-Schnee auf, die jeweils in der zylindrischen Wandung 32a des Gehäuses 32 vorgesehen sind. Anordnung und Zweck dieser Bauelemente entsprechen denjenigen in dem ersten Ausführungsbeispiel. Zur Vermeidung von Wiederholungen wird auf die diesbezüglichen Ausführungen Bezug genommen.

An einer zentral gelagerten Nabe 35 (Nabenlager sind in Fig. 4 ohne Bezugszeichen schematisch dargestellt) sind Zwischenwände 37 starr befestigt, die den Innenraum des Gehäuses 32 in Umfangsrichtung in sechs Expansionskammern 38a-38f unterteilen. Zur Vereinfachung und Verdeutlichung der Darstellung sind in Fig. 4 die Zwischenwände 37 weggelassen und ist die Nabe 35 dort ungeschnitten dargestellt.

In Fig. 4 dargestellt sind jedoch Längsnuten 35a, die über den Umfang der Nabe 35 verteilt jeweils zwischen den Zwischenwänden 37 in deren Außenoberfläche eingebracht sind und die sich in axialer Richtung der Nabe 35 erstrecken. Die Längsnuten 35a dienen der Aufnahme und axial beweglichen Führung von im Wesentlichen scheibensegmentförmigen Seitenwandinlays 39, welche in Umfangsrichtung zwischen den Zwischenwänden 37 angeordnet sind und die Expansionskammern 38a-38f auf beiden Stirnseiten begrenzen. Die Seitenwandinlays 39 können von einer Art Gitterrahmen gehalten werden, der in der Figur nicht näher dargestellt ist.

Auf der radial äußeren Seite sind die Seitenwandinlays 39 in Ringnuten 32b, 32c mit hierin jeweils eingesetztem Führungsring 36 gestützt, die in der inneren Oberfläche der Zylinderwandung 32a des Gehäuses 32 eingebracht sind. Die Ringnuten 32b, 32c sind gegenüber einer senkrecht zur Nabenachse gelegenen Ebene derart geneigt, dass der axiale Abstand der Ringnuten 32b, 32c auf der Seite der Einlassöffnung 33 am kleinsten und auf der Seite der Auslassöffnung 34 am größten ist. Mit umlaufender Nabe 35 werden die Seitenwandinlays 39 durch die in die Ringnuten 32b, 32c eingepassten Führungsringe 36 derart geführt, dass sie sich in einer Position auf der Seite der Einlassöffnung 33 einander am nächsten sind, sich von dieser Position ausgehend voneinander entfernen und in einer Position auf der Seite der Auslassöffnung 34 am weitesten voneinander entfernt sind. Auf diese Weise weisen die durch die Nabe 35, die Seitenwandinlays 39 und die Zylinderaußenwand 32a begrenzten Expansionskammern 38a-38f auf der Seite der Einlassöffnung 33 das kleinste Volumen und auf der Seite der Auslassöffnung das größte Volumen auf.

Es sind also analog der Trockeneisschnee-Erzeugungseinrichtung 20 des zweiten Ausführungsbeispiels Expansionskammern 38a-38f veränderlichen Volumens vorgesehen, die von der Einlassöffnung 33 ausgehend, zusätzlich zu der dort ohnehin stattfindenden Expansion, eine weitere Expansion des CO₂-Schnee/Gas-Gemischs erzwingen.

Abgesehen von der anderen Art der Zwangsexpansion entsprechen Funktionsweise und Wirkungen der Trockeneisschnee-Erzeugungseinrichtung 30 derjenigen der Trockeneisschnee-Erzeugungseinrichtung 20 des zweiten Ausführungsbeispiels. Insbesondere erfolgt eine sprunghafte Expansion des einströmenden flüssigen CO₂ an der Eintrittsöffnung, kann der entstehende CO₂-Schnee während eines Umlaufs auf gewünschte Korngröße anwachsen und verlässt die Austrittsöffnung als gleichmäßig pulsierender Strahl. Durch die Zwangsexpansion im Laufe des Umlaufs wird die Schneebildung intensiviert und optimiert und erhält die Nabe 35 aus dieser Zwangsexpansion ein Antriebsmoment und benötigt keinen eigenen Antrieb, sondern erhält ihre Rotation selbsttätig aufrecht.

Bei der zwangsweisen Expansion wird der Druck in der Expansionskammer beispielsweise von 30 bar auf weniger als 5 bar herabgesetzt. Dies führt zu einer intensiven Bildung von Schnee.

In einer Abwandlung des dritten Ausführungsbeispiels können die Führungsringe 36 weggelassen werden, wenn die Ringnuten 32a, 32b ausreichend glatt und maßhaltig hergestellt sind.

Die Längsnuten 35a können in einer weiteren Abwandlung zur Erleichterung der Montage der Zwischenwände 37 zumindest zu einer Seite der Nabe 35 hin durchgehen. Sie können zur seitlichen Kippsicherung der Seitenwandinlays 39 einen konischen oder T-förmigen Querschnitt aufweisen. Sofern durch die Zwischenwände 37 eine ausreichende seitliche Lagestabilität der Seitenwandinlays 39 sichergestellt ist, kann auf die Führungsschlitze 35a auch verzichtet werden.

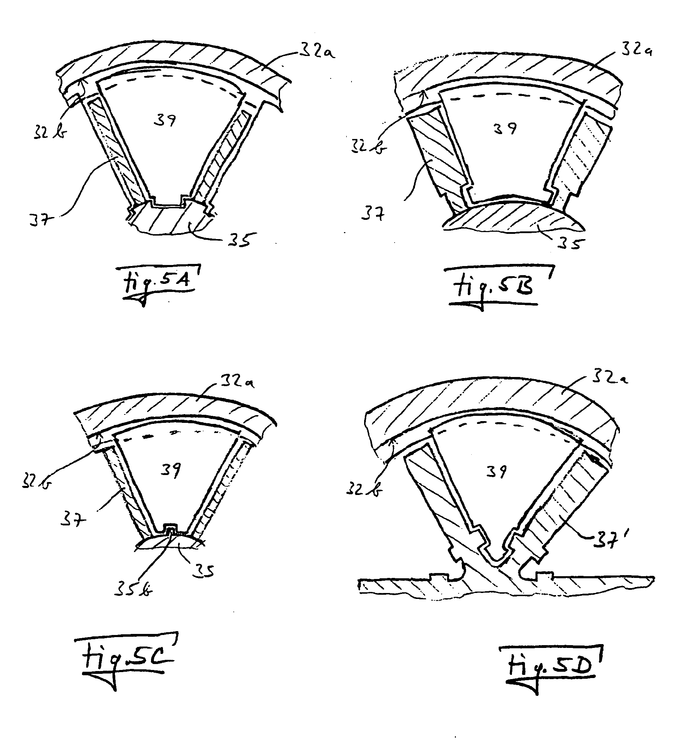

In einer weiteren Abwandlung befinden sich Längsnuten nicht in der Oberfläche der Nabe 35, sondern in Oberflächen der Zwischenwände 39 und greifen entsprechende Erhebungen an den Seitenwandinlays 39 in diese Längsnuten ein. Es muss auch gar keine Nabe 35 vorhanden sein, vielmehr können die Zwischenwände 37 als ein einziges sternförmiges Bauteil ausgebildet sein. Schließlich können die Längsnuten durch sich in axialer Richtung erstreckende Erhebungen auf der Nabenaußenseite oder den Zwischenwänden ersetzt sein, die in entsprechende Ausnehmungen in den Seitenwandinlays 39 greifen. Derartige Abwandlungen sind in den Fign. 5B bis 5D gezeigt, während Fig. 5A die entsprechende Gestaltung nach dem Ausführungsbeispiel zeigt. In den Fign. 5A bis 5C ist jeweils ein Seitenwandsegment 39 mit zwei angrenzenden Zwischenwänden 37, einem Abschnitt der Gehäusewandung 32a und einem Abschnitt der Nabe 35 gezeigt. In Fig. 5D im gleichen Ausschnitt ein Abschnitt eines sternförmigen Läufers 37' gezeigt, der ohne eigene Nabe auskommt. Eine sich axial erstreckende Erhebung 35b zur Führung eines Seitenwandinlays 39 kann auch als Passfeder ausgebildet sein.

In einer weiteren Abwandlung können die Seitenwandinlays 39 nur auf einer Stirnseite des zylindrischen Innenraums vorgesehen sein, während auf der anderen Seite die Expansionskammern von der Gehäusewand oder einer durchgehenden, mitlaufenden Scheibe bzw. einer Haltestruktur, in welcher die Zwischenwände 37 gehalten oder integriert sind, begrenzt werden. Zur Gewährleistung der Volumenänderung der Expansionskammern 38a-38f reicht die axiale Beweglichkeit auf einer Seite aus. Allerdings sind bei einer solchen Gestaltung höhere Vibrationen im Gehäuse zu erwarten.

Es versteht sich, dass die vorstehende Beschreibung in vielen Belangen beispielhaft ist und die Erfindung in keiner Weise einschränkt, sondern nur zur Erläuterung ihres Funktionsprinzips dient. Es sind viele Abwandlungen und Erweiterungen denkbar, die alle von dem Erfindungsgedanken umfasst sind und von denen einige bereits bei den Ausführungsbeispielen genannt wurden. Das Wesentliche ist, dass der grundlegende Erfindungsgedanke verwirklicht ist, der in den unabhängigen Patentansprüchen wiedergegeben ist.

In den vorstehend beschriebenen Ausführungsbeispielen wird durch die Unterteilung in Kammern ein pulsierender Ausstoß von CO₂-Schnee erzeugt und das flüssige CO₂ teilweise durch Volumenveränderlichkeit der Kammern zwangsweise expandiert. Die Pusfrequenz des ausgestoßenen Schnees hängt von der Drehzahl der Trommel ab. Eine Pulsfrequenz im Bereich von 1 Hz bis 200 Hz hat sich als vorteilhaft herausgestellt. Im Falle eines Fremdantriebs wie bei dem ersten Ausführungsbeispiel ist die Drehzahl der Trommel durch die Drehzahl des Antriebs und eine eventuelle Über- oder Untersetzung bestimmt. Im Falle eines reinen Eigenantriebs durch Zwangsexpansion ist die Drehzahl der Trommel durch den Überdruck bzw. den Volumenstrom des flüssigen CO₂ bestimmt. Die wählbare Drehzahl kann auch größer als 200 Hz sein.

Es ist anzumerken, dass der grundlegende Erfindungsgedanke der tranchenweisen bzw. regelmäßig pulsierenden Erzeugung von Trockeneisschnee auch ohne rotierende Trommel mit Expansionskammern etwa durch einen rotierenden Kugelhahn oder ein schnell öffnendes und schließendes Magnetventil in der Zuleitung für flüssiges CO₂, der bzw. das flüssiges CO₂ in Tranchen abgibt, verwirklicht werden kann. Eine solche Lösung wird derzeit jedoch und wegen möglicher extremer stromaufwärtiger Druckschwankungen nicht bevorzugt; außerdem ändert eine solche Anordnung an der dann immer noch langen Bauform der Expansions- und Agglomerationskammer nichts.

In den Figuren zu den vorstehend beschriebenen Ausführungsbeispielen sind jeweils die Eintrittsöffnung 13, 23, 33 für flüssiges CO₂ und die Austrittsöffnung 14, 24, 34 für CO₂-Schnee in etwa gegenüberliegend so dargestellt, dass die Eintrittsöffnung bezüglich einer horizontalen Mittelebene des Gehäuses 12, 22, 32 leicht nach oben versetzt ist, während die Austrittsöffnung leicht nach unten versetzt ist, oder umgekehrt, die Achsen der Eintritts- und der Austrittsöffnung aber parallel zueinander sind. Diese Anordnung ist nicht zwingend. Die Achsen der Eintritts- und der Austrittsöffnung können miteinander fluchten, insbesondere können sie die Achse der Nabe 15, 25, 35 schneiden. Die Achsen der Eintritts- und der Austrittsöffnung können aber auch einen mehr oder weniger deutlichen Winkel zueinander aufweisen. Insbesondere im ersten Ausführungsbeispiel könnte die Austrittsöffnung 14 auch um eine oder mehr Kammern in Umdrehungsrichtung weiter angeordnet sein, um die Zeit für die Expansion des CO₂ auszudehnen und daher den Umlaufweg der Trommel noch besser auszunutzen und die gesamte Anordnung noch weiter zu verkürzen.

In dem zweiten und dritten Ausführungsbeispiel sind zwei Möglichkeiten erläutert, die Volumenveränderlichkeit der Expansionskammern über einen Umlauf der Trommel zu verwirklichen. Die Volumenveränderlichkeit kann aber auch auf andere Weise verwirklicht werden; hierzu stehen etwa die verschiedenen Bauformen von Umlaufverdrängermaschinen zur Verfügung, die im Stand der Technik verfügbar sind.

Die in Fig. 1 dargestellte Ausblaseinrichtung 11 kann in jedem Ausführungsbeispiel vorgesehen sein, ohne dass sie dort näher dargestellt ist. Sie kann auch, abweichend von der dargestellten Einbauposition in Fig. 1, so angeordnet sein, dass sie an einer Stelle ausbläst, an welcher die Expansionskammer 18 den Bereich der Austrittsöffnung 14 bereits verlassen hat; hierdurch können Störungen der Strömung durch den Ausblasstrahl vermieden werden.

Ein externer Antrieb der Trommel mit den Expansionskammern ist nur im ersten Ausführungsbeispiel vorgesehen. Es kann jedoch auch bei dem zweiten oder dritten Ausführungsbeispiel und deren Abwandlungen ein externer Antrieb vorgesehen sein, der ein zusätzliches Antriebsmoment oder ein Bremsmoment aufbringt, um die Drehzahl der Trommel zuverlässig festlegen oder gar regeln zu können.

Es ist ferner darauf hinzuweisen, dass die Anzahl der Expansionskammern auf dem Umfang der Nabe völlig beliebig ist, obschon zu Zwecken der Darstellung in den Zeichnungen jeweils sechs Expansionskammern gewählt wurden. Durch die Anzahl der Expansionskammern kann die Größe der jeweiligen Tranchen wie auch die Pulsfrequenz des Strahls variiert werden. Im ersten Ausführungsbeispiel könnte im Extrem auch mit einer einzigen Kammer gearbeitet werden, die sich, abgesehen von der für die Tranchierung erforderlichen einzigen Zwischenwand, über nahezu 360° der Trommel erstreckt.

Eine Optimierung im Hinblick auf Tranchengröße, Tranchenfrequenz, Agglomerationsdichte und Trennintervall ist beispielsweise durch Variation von Drehzahl, LCO₂-Volumenstrom, Außendurchmesser der Nabe, Innendurchmesser und Länge des Gehäuses, Dicke der Zwischenwände, Anzahl der Expansionskammern und Lage von Ein- und Auslassöffnung möglich. Im zweiten Ausführungsbeispiel kommt das Maß der Außermittigkeit, im dritten Ausführungsbeispiel der Abstand der Seitenwände bzw. der Schiefwinkel der Ringnuten, allgemeiner das Maß der Volumenänderung der Expansionskammern als Optimierungsparameter hinzu.

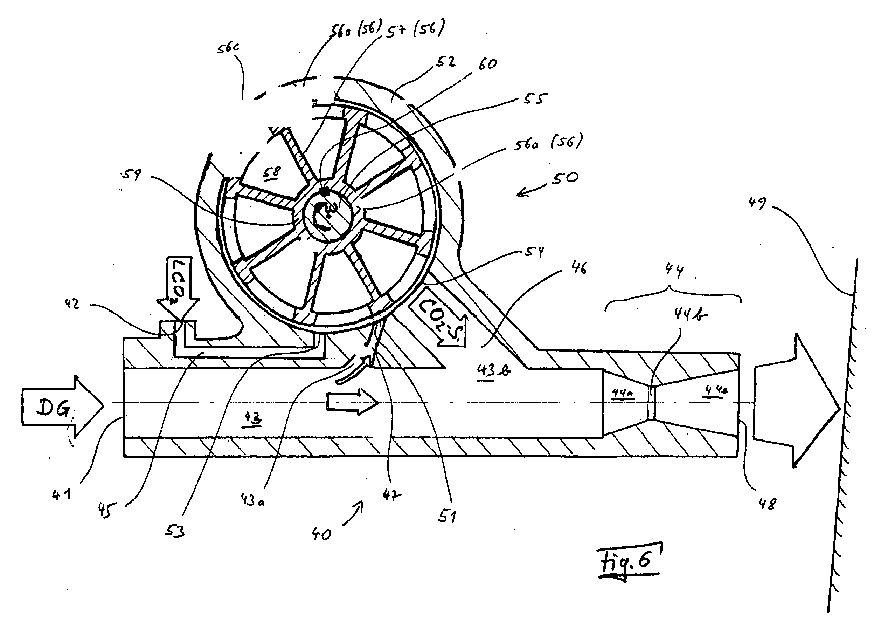

Fig. 6 zeigt als viertes Ausführungsbeispiel der vorliegenden Erfindung eine Trockeneisschneestrahl-Reinigungsvorrichtung 40, welche eine Trockeneisschnee-Erzeugungseinrichtung 50, die dem ersten Ausführungsbeispiel ähnelt, enthält.

An einem Druckgaseinlass 41 ist Druckgas (DG) über eine nicht näher dargestellte Zuleitung angeschlossen. Das Druckgas strömt durch einen Druckkanal 43, der einen später erläuterten Abzweig 43a und eine Zumischöffnung 43b aufweist. Dort nimmt das Druckgas als Trägergas den in der später erläuterten Trockeneisschnee-Erzeugungsvorrichtung 50 erzeugten Trockeneisschnee auf. Das Gemisch strömt weiter durch eine Lavaldüse 44, die aus einem verjüngenden Abschnitt 44a, einer Engstelle (Lavalpunkt) 44b und einem erweiternden Abschnitt 44c besteht, wird dort gegebenenfalls auf Überschallgeschwindigkeit beschleunigt und tritt an einer Strahlöffnung 48 als Schneestrahl aus. Der austretende Schneestrahl wird auf eine Oberfläche 49 gerichtet und dort gegebenenfalls bewegt, um die Oberfläche 49 zu reinigen.

An einem Flüssiggasanschluss 42 wird flüssiges CO₂ über eine nicht näher dargestellte Zuleitung zugeführt und gelangt über einen Flüssiggaskanal 45 in dem Gehäuse 52 an eine Einlassöffnung 53, die in einen zylindrischen Hohlraum des Gehäuses 52 mündet. Um etwa 45° versetzt weist der Hohlraum ferner eine Auslassöffnung 54 auf, die über eine um 45° zu dem Druckkanal 43 geneigte Bohrung 46 zu der Zumischöffnung 43 führt.

In dem zylindrischen Hohlraum sitzt auf einer Welle 55 ein käfigartiger Läufer 56 mit einem Nabenteil 56a, einem Mantelteil 56b sowie acht Zwischenwänden 57. Die Zwischenwände 57 teilen acht Expansionskammern 58 ab, die über Öffnungen 56c in dem Mantelteil 56b zu der Zylinderwandung des Gehäuses 52 hin offen sind. Der Nabenteil 56a ist über eine Passfeder 60 drehfest mit der Welle 55 verbunden. Die Welle 55 ist über nicht näher dargestellte Antriebsmittel angetrieben, die etwa einen Elektromotor, oder einen durch von dem Druckgaskanal oder der Druckgaszuleitung abgezweigtes Druckgas betriebenen Gasmotor aufweisen können.

Während eines Umlaufs in Richtung der Antriebsrichtung (Pfeil "ω") kommuniziert eine Expansionskammer 58 zunächst mit der Einlassöffnung 52, sodass flüssiges CO₂ in die Expansionskammer 58 eintreten kann. Da die Öffnung 56c und insbesondere der Querschnitt der Expansionskammer 58 beträchtlich größer als der Querschnitt der Einlassöffnung 52 ist, erfolgt eine schlagartige Expansion, und es bilden sich Schneekristalle. Mit weiterem Umlauf des Läufers 56 expandiert das CO₂ weiter und bildet durch Anhaftung immer größer werdende Körner. Wenn die Expansionskammer 58 nach einer Drehung um etwa 315° die Austrittsöffnung 54 erreicht, wird das entstandene Gemisch von CO₂-Schnee und CO₂-Gas in die sich anschließende Bohrung abgegeben und an der Zumischöffnung 43b von der Trägergasströmung mitgerissen.

In Umdrehungsrichtung kurz hinter der Austrittsöffnung mündet der Abzweig 43a des Druckgaskanals 43 über einen Verbindungskanal 47 in eine Ausblasöffnung 51, die abgezweigtes Druckgas gegen die Drehrichtung des Läufers 56 in die Expansionskammer 58 bläst und so anhaftende Schneeteilchen zuverlässig entfernt.

Es versteht sich, dass die Darstellung der Reinigungsvorrichtung 40 rein schematisch gehalten ist, um das Prinzip zu verdeutlichen. Eventuelle Zuleitungen, Absperr- oder Regulierungsmittel, Querschnittsveränderungen oder Einbauten im Strömungskanal 43, Zwischenstücke oder Zuführungen für Additive können nach Bedarf vorgesehen sein. Das Druckgas zum Ausblasen muss nicht notwendigerweise aus dem Druckgaskanal abgezweigt, sondern kann auch über eine eigene Leitung zugeführt werden. Die Trockeneisschnee-Erzeugungsvorrichtung 50 ist mit der Trockensschneestrahl-Reinigungsvorrichtung 40 in einem gemeinsamen, einteiligen Gehäuse 52 dargestellt; dieses Gehäuse 52 kann aber mehrteilig sein.

Es versteht sich ferner, dass die Einzelheiten der beschriebenen Ausführungsbeispiele, wo möglich und sinnvoll, auf andere Ausführungsbeispiele übertragbar sind und die Erfindung keineswegs auf eine bestimmte Kombination von Merkmalen eines bestimmten Ausführungsbeispiels beschränkt ist.

Im Übrigen wird die Erfindung durch die beigefügten Patentansprüche definiert. Alle rotierenden Bauteile, die in einem jeweiligen Ausführungsbeispiel beschrieben sind, bilden zusammen eine Trommel im Sinne der Erfindung. Der zylindrische Innenraum des Gehäuses bildet mit allen hierin angeordneten Teilen eine Expansionseinrichtung im Sinne der Erfindung.

### Bezugszeichenliste

- 10, 20, 30, 50: Trockeneisschnee-Erzeugungseinrichtung
- 11, 51: Ausblaseinrichtung (-öffnung)
- 12, 22, 32, 52: Gehäuse
- 12a, 22a, 32a: zylindrische Wand desselben
- 32b,32c: Ringnut hierin
- 13, 23, 33, 53: Eintrittsöffnung
- 14, 24, 34, 54: Austrittsöffnung
- 15, 25, 35: Nabe
- 25a: Sitznut hierin
- 35a: Längsnut hierin
- 55: Welle
- 16 56: Käfig
- 16a 56a: zylindrische Wand hiervon (Mantelteil)
- 56b: Öffnung hierin
- 56c: Nabenteil
- 26: Gleitbüchse
- 26a,26b: Durchbruch
- 36: Führungsring
- 17, 27, 37, 57: Zwischenwand
- 37': sternförmiger Läufer
- 18, 28a-28f, 38a-38f 56: Expansionskammer
- 29: Federung
- 39: Seitenwandinlay
- 40: Trockeneisschneestrahl-Reinigungsvorrichtung
- 41: Druckgasanschluss
- 42: Flüssiggasanschluss
- 43: Druckgaskanal
- 43a: Abzweig hiervon
- 43b: Zumischöffnung hierin
- 44: Lavaldüse
- 44a: verjüngender Abschnitt
- 44b: Engstelle
- 44c: erweiternder Abschnitt
- 45: Flüssiggaskanal
- 46: Schneekanal
- 47: Verbindungskanal
- 48: Stahlaustrittsöffnung
- 49: Oberfläche

- ω: Drehrichtung
- e: Außermittigkeit der Nabe 25
- CO₂-S,: CO₂-Schnee (ggf. mit CO₂-Gas vermischt)
- DG: Druckgas
- LCO₂: flüssiges CO₂

## Patentansprüche

1. Verfahren zum Herstellen von Trockeneisschnee, mit den Schritten:
- Zuführen von flüssigem CO₂;
- Expandieren des CO₂ derart, dass ein Gemisch von CO₂-Gas und CO₂-Schnee entsteht;
**dadurch gekennzeichnet,**
**dass** der CO₂-Schnee in Tranchen vorbestimmter Menge mit vorgegebener Frequenz erzeugt und abgegeben wird.

2. Verfahren gemäß Anspruch 1,
**dadurch gekennzeichnet,**
**dass** flüssiges CO₂ einer rotierenden Trommel zugeführt wird, die eine Anzahl von auf ihrem Umfang verteilten, voneinander abgeteilten Expansionskammem aufweist und in eine Ableitung für CO₂-Schnee mündet.

3. Verfahren gemäß Anspruch 2,
**dadurch gekennzeichnet,**
**dass** die Trommel extern angetrieben wird.

4. Verfahren gemäß Anspruch 2 oder 3,
**dadurch gekennzeichnet,**
**dass** das Volumen der Expansionskammern von der Einmündung flüssigen CO₂ in die Trommel bis zur Ableitung des CO₂-Schnees vergrößert wird und danach wieder verkleinert wird.

5. Verfahren gemäß einem der Ansprüche 2 bis 4,
**dadurch gekennzeichnet,**
**dass** am Ort der Ableitung von CO₂-Schnee oder in Drehrichtung der Trommel an einer späteren Stelle ein Druckgas, insbesondere CO₂ oder Druckluft, in die Expansionskammem eingeblasen wird.

6. Verfahren zum Reinigen von Oberflächen mittels Trockeneisschnee, mit den Schritten:
- Erzeugen von CO₂-Schnee aus flüssigem CO₂;
- Einleiten des CO₂-Schnees in eine Trägergasströmung;
- Zuführen der Trägergasströmung mit CO₂-Schnee einer Düse, insbesondere einer Lavaldüse, und einer Abstrahlöffnung; und
- Richten des die Abstrahlöffnung verlassenden Strahls auf die zu reinigende Oberfläche, wobei der Strahl vorzugsweise über die Oberfläche bewegt wird,
**dadurch gekennzeichnet,**
**dass** der CO₂-Schnee gemäß einem der Ansprüche 1 bis 5 erzeugt wird.

7. Vorrichtung zum Herstellen von Trockeneisschnee, aufweisend:
- eine Zuleitung für flüssiges CO₂;
- eine Expansionseinrichtung, die zur Expansion des zugeführten CO₂ derart, dass ein Gemisch von CO₂-Gas und CO₂-Schnee entsteht, eingerichtet ist; und
- eine Ableitung für den CO₂-Schnee,
**dadurch gekennzeichnet,**
**dass** die Vorrichtung eingerichtet ist, den CO₂-Schnee in Tranchen vorbestimmter Menge mit vorgegebener Frequenz zu erzeugen und abzugeben.

8. Vorrichtung gemäß Anspruch 7,
weiter **gekennzeichnet**
**durch** ein im Wesentlichen geschlossenes Gehäuse mit einem im Wesentlichen zylindrischen Innenraum sowie einer Eintrittsöffnung und einer Austrittsöffnung, die in einer Wandung des Gehäuses in Umfangsrichtung gesehen an verschiedenen Stellen angeordnet sind, wobei die Eintrittsöffnung mit der Zuleitung für flüssiges CO₂ verbunden ist und die Austrittsöffnung mit der Ableitung für CO₂-Schnee verbunden ist, und
**durch** eine in dem Gehäuse rotierende Trommel mit einer Anzahl von entlang ihrem Umfang verteilten, voneinander abgeteilten Expansionskammern, wobei jede Expansionskammer im Verlauf eines Umlaufs mit der Eintrittsöffnung und mit der Austrittsöffnung kommuniziert,
wobei die Expansionskammem in Umfangsrichtung durch eine entsprechende Anzahl von sich radial und in Achsenrichtung erstreckenden Zwischenwänden voneinander abgeteilt sind, wobei die Zwischenwände vorzugsweise auf einer Nabe angeordnet und/oder durch eine Tragstruktur in ihrer Lage gehalten oder geführt sind.

9. Vorrichtung gemäß Anspruch 8,
weiter **gekennzeichnet**
**durch** einen externen Antrieb für die Trommel, wobei die Drehzahl des Antriebs fest vorgebbar oder im Betrieb einstellbar ist.

10. Vorrichtung gemäß Anspruch 9,
**dadurch gekennzeichnet**
**dass** die Trommel mit der Achse des zylindrischen Innenraums des Gehäuses fluchtend gelagert ist.

11. Vorrichtung gemäß einem der Ansprüche 8 oder 9,
**dadurch gekennzeichnet,**
**dass** die Expansionskammem ein veränderliches Volumen derart aufweisen, dass sich das Volumen von der Eintrittsöffnung bis zur Austrittsöffnung vergrößert und danach wieder verkleinert.

12. Vorrichtung gemäß Anspruch 11,
**dadurch gekennzeichnet,**
**dass** die Trommel eine Nabe aufweist, deren Achse parallel zu der Achse des zylindrischen Innenraums des Gehäuses zu der Eintrittsöffnung hin versetzt ist; und
**dass** die Zwischenwände in Längsnuten, die über den Umfang der Nabe verteilt sind, so aufgenommen sind, dass sie radial beweglich sind, wobei die Zwischenwände vorzugsweise nach außen hin vorgespannt sind.

13. Vorrichtung gemäß Anspruch 12,
**dadurch gekennzeichnet,**
**dass** entlang der zylindrischen Innenseite des Gehäuses eine Gleithilfe vorzugsweise drehfest angeordnet ist, welche eine im Verhältnis zu der Innenseite des Gehäuses glatte Innenoberfläche aufweist, an welcher die Zwischenwände entlanggleiten.

14. Vorrichtung gemäß Anspruch 11,
**dadurch gekennzeichnet,**
**dass** wenigstens eine Stirnseite jeder Expansionskammern durch ein zwischen zwei Zwischenwänden eingesetztes Scheibensegment definiert ist,
wobei das Scheibensegment auf der radial inneren Seite axial frei beweglich gelagert ist und auf der radial äußeren Seite in der zylindrischen Innenwand des Gehäuses ausgebildeten, für die Scheibensegmente der einen Seite aller Expansionskammem gemeinsamen Ringnut geführt ist, und
wobei eine Führungsebene der Ringnut bezüglich einer Ebene senkrecht zu der Achse des zylindrischen Innenraums des Gehäuses einen Winkel derart aufweist, dass die Expansionskammer im Laufe ihres Umlaufs auf Höhe der Einlassöffnung eine geringere axiale Breite als auf Höhe der Auslassöffnung aufweist.

15. Vorrichtung gemäß Anspruch 14,
**dadurch gekennzeichnet,**
**dass** beide Stirnseiten der Expansionskammern jeweils durch ein Scheibensegment gebildet sind und zwei Ringnuten vorgesehen sind, in denen jeweils die Scheibensegmente einer Stirnseite geführt werden, wobei die Ringnuten auf Höhe der Einlassöffnung einen geringeren axialen Abstand als auf Höhe der Auslassöffnung aufweisen.

16. Vorrichtung gemäß Anspruch 14 oder 15,
**dadurch gekennzeichnet,**
**dass** in den Ringnuten jeweils ein Gleitring mit konkavem Querschnitt vorgesehen ist, in welchem die Seitenwandsegmente gleiten.

17. Vorrichtung gemäß einem der Ansprüche 14 bis 16,
**dadurch gekennzeichnet,**
**dass** in die Scheibensegmente auf der radial inneren Seite mittels Längsnuten oder längs verlaufender Erhebungen, die in bzw. auf der Oberfläche einer Nabe, auf welcher die Zwischenwände angeordnet oder mit welcher sie einstückig ausgebildet sind, oder in bzw. auf den Zwischenwänden selbst ausgebildet sind, axial beweglich gelagert sind.

18. Vorrichtung gemäß einem der Ansprüche 7 bis 17,
weiter **gekennzeichnet**
**durch** eine Ausblaseinrichtung zum Einblasen eines Druckgases, insbesondere CO₂ oder Druckluft, in die Expansionskammern am Ort der Auslassöffnung oder in Drehrichtung der Trommel an einer späteren Stelle.

19. Vorrichtung zum Reinigen von Oberflächen mittels Trockeneisschnee, aufweisend:
- eine Einrichtung zum Erzeugen von Trockeneisschnee;
- eine Einrichtung zum Einleiten des Trockeneisschnees in eine Trägergasströmung;
- eine Einrichtung zum Zuführen der Trägergasströmung mit Trockeneisschnee einer Düse, insbesondere einer Lavaldüse, und einer Abstrahlöffnung; und
- einer Einrichtung zum Richten des die Abstrahlöffnung verlassenden Strahls auf die zu reinigende Oberfläche, wobei der Strahl vorzugsweise über die Oberfläche bewegt wird,
**dadurch gekennzeichnet,**
**dass** die Einrichtung zum Erzeugen von Trockeneisschnee gemäß einem der Ansprüche 7 bis 18 aufgebaut ist.

20. Vorrichtung gemäß Anspruch 19, soweit auf Anspruch 9 rückbezogen,
**dadurch gekennzeichnet**,
der externe Antrieb ein Gasmotor ist, der vorzugsweise durch einen Teil des Trägergases angetrieben wird.

## Claims

1. Method for the production of dry ice snow, with the steps:
- feed of liquid CO₂;
- expansion of the CO₂ in such a way as to obtain a mixture of CO₂ gas and CO₂ snow;
**characterized in that** the CO₂ snow is generated and dispensed in portions of predetermined quantity at a stipulated frequency.

2. Method according to Claim 1, **characterized in that** liquid CO₂ is fed to a rotating drum which has a number of expansion chambers distributed on its circumference and divided off from one another and issues into a discharge line for CO₂ snow.

3. Method according to Claim 2, **characterized in that** the drum is driven externally.

4. Method according to Claim 2 or 3, **characterized in that** the volume of the expansion chambers is increased from the issue of liquid CO₂ into the drum to the discharge line of the CO₂ snow and is subsequently reduced again.

5. Method according to one of Claims 2 to 4, **characterized in that** a compressed gas, in particular CO₂ or compressed air, is injected into the expansion chambers at the location of the discharge line of CO₂ snow or at a later point in the direction of rotation of the drum.

6. Method for the cleaning of surfaces by means of dry ice snow, with the steps:
- generation of CO₂ snow from liquid CO₂;
- introduction of the CO₂ snow into a carrier gas flow;
- feed of the carrier gas flow with CO₂ snow to a nozzle, in particular a Laval nozzle, and to a blasting orifice; and
- aiming of the jet leaving the blasting orifice onto the surface to be cleaned, the jet preferably being moved over the surface,
**characterized in that** the CO₂ snow is generated according to one of Claims 1 to 5.

7. Device for the production of dry ice snow, having:
- a feed line for liquid CO₂;
- an expansion arrangement which is designed to expand the fed CO₂ in such a way as to obtain a mixture of CO₂ gas and CO₂ snow; and
- a discharge line for the CO₂ snow,
**characterized in that** the device is designed to generate and dispense the CO₂ snow in portions of predetermined quantity at a stipulated frequency.

8. Device according to Claim 7, characterized further by an essentially closed housing with an essentially cylindrical inner space and with an inlet port and an outlet port which are arranged in a wall of the housing at different locations, as seen in the circumferential direction, the inlet port being connected to the feed line for liquid CO₂ and the outlet port being connected to the discharge line for CO₂ snow, and by a drum rotating in the housing and having a number of expansion chambers distributed along its circumference and divided off from one another, each expansion chamber communicating in the course of a revolution with the inlet port and with the outlet port, the expansion chambers being divided off from one another in the circumferential direction by a corresponding number of intermediate walls extending radially and in the axial direction, the intermediate walls preferably being arranged on a hub and/or being held in their position or guided by a carrying structure.

9. Device according to Claim 8, characterized further by an external drive for the drum, the rotational speed of the drive being permanently stipulatable or being adjustable during operation.

10. Device according to Claim 9, **characterized in that** the drum is mounted in alignment with the axis of the cylindrical inner space of the housing.

11. Device according to either one of Claims 8 and 9, **characterized in that** the expansion chambers have a variable volume in such a way that the volume is increased from the inlet port to the outlet port and is subsequently reduced again.

12. Device according to Claim 11, **characterized in that** the drum has a hub, the axis of which is offset, parallel to the axis of the cylindrical inner space of the housing, with respect to the inlet port; and **in that** the intermediate walls are accommodated in longitudinal grooves which are distributed over the circumference of the hub, such that the said intermediate walls are movable radially, the intermediate walls preferably being prestressed outwardly.

13. Device according to Claim 12, **characterized in that** a sliding aid is arranged preferably fixedly in terms of rotation along the cylindrical inner side of the housing and has an inner surface which is smooth in relation to the inner side of the housing and along which the intermediate walls slide.

14. Device according to Claim 11, **characterized in that** at least one end face of each expansion chamber is defined by a disc segment inserted between two intermediate walls, the disc segment being mounted freely movably axially on the radially inner side and being guided on the radially outer side in an annular groove formed in the cylindrical inner wall of the housing and common to the disc segments on one side of all the expansion chambers, and a guide plane of the annular groove having with respect to a plane perpendicular to the axis of the cylindrical inner space of the housing an angle such that the expansion chamber, in the course of its revolution, has a smaller axial width level with the inlet port than level with the outlet port.

15. Device according to Claim 14, **characterized in that** the two end faces of the expansion chambers are formed in each case by a disc segment, and two annular grooves are provided, in which in each case the disc segments of an end face are guided, the annular grooves having a smaller axial spacing level with the inlet port than level with the outlet port.

16. Device according to Claim 14 or 15, **characterized in that** a sliding ring of concave cross section, in which the side wall segments slide, is provided in each of the annular grooves.

17. Device according to one of Claims 14 to 16, **characterized in that** the disc segments are mounted axially movably on the radially inner side by means of longitudinal grooves or longitudinally running elevations which are formed in or on the surface of a hub, on which the intermediate walls are arranged or with which they are produced in one piece, or in or on the intermediate walls themselves.

18. Device according to one of Claims 7 to 17, characterized further by a blow-out arrangement for injecting a compressed gas, in particular CO₂ or compressed air, into the expansion chambers at the location of the outlet port or at a later point in the direction of rotation of the drum.

19. Device for the cleaning of surfaces by means of dry ice snow, having:
- an arrangement for generating dry ice snow;
- an arrangement for introducing the dry ice snow into a carrier gas flow;
- an arrangement for feeding the carrier gas flow with dry ice snow to a nozzle, in particular a Laval nozzle, and to a blasting orifice; and
- an arrangement for aiming the jet leaving the blasting orifice onto the surface to be cleaned, the jet preferably being moved over the surface,
**characterized in that** the arrangement for generating dry ice snow is constructed according to one of Claims 7 to 18.

20. Device according to Claim 19, insofar as it refers back to Claim 9, **characterized in that** the external drive is a gas motor which is preferably driven by part of the carrier gas.

## Revendications

1. Procédé pour la production de glace sèche, comprenant les étapes suivantes:
- fourniture de CO₂ liquide;
- expansion du CO₂ de telle manière qu'il se forme un mélange de gaz CO₂ et de neige de CO₂;
**caractérisé en ce que** la neige de CO₂ est produite et délivrée en tranches d'une quantité prédéterminée avec une fréquence prédéterminée.

2. Procédé selon la revendication 1, **caractérisé en ce que** le CO₂ liquide est fourni à un tambour tournant, qui présente plusieurs chambres d'expansion séparées les unes des autres et réparties sur sa périphérie, et débouche dans une conduite d'évacuation pour la neige de CO₂.

3. Procédé selon la revendication 2, **caractérisé en ce que** le tambour est entraîné de l'extérieur.

4. Procédé selon la revendication 2 ou 3, **caractérisé en ce que** le volume des chambres d'expansion augmente puis diminue de nouveau depuis l'embouchure d'arrivée de CO₂ liquide dans le tambour jusqu'à la conduite d'évacuation de la neige de CO₂.

5. Procédé selon l'une quelconque des revendications 2 à 4, **caractérisé en ce que** l'on insuffle un gaz sous pression, en particulier du CO₂ ou de l'air comprimé, dans les chambres d'expansion à l'endroit de la conduite d'évacuation de la neige de CO₂ ou en un point ultérieur dans le sens de rotation du tambour.

6. Procédé pour le nettoyage de surfaces au moyen de glace sèche, comprenant les étapes suivantes:
- production de neige de CO₂ à partir de CO₂ liquide;
- introduction de la neige de CO₂ dans un courant de gaz porteur;
- fourniture du courant de gaz porteur avec la neige de CO₂ à une tuyère, en particulier à une tuyère de Laval, et à une ouverture de projection; et
- orientation du jet quittant l'ouverture de projection vers la surface à nettoyer, dans lequel le jet est de préférence déplacé au-dessus de la surface,
**caractérisé en ce que** la neige de CO₂ est produite selon l'une quelconque des revendications 1 à 5.

7. Dispositif pour la production de glace sèche, comprenant:
- une conduite d'arrivée pour le CO₂ liquide;
- un dispositif d'expansion, qui est conçu pour l'expansion du CO₂ fourni, de telle manière qu'il se forme un mélange de gaz CO₂ et de neige de CO₂; et
- une conduite d'évacuation pour la neige de CO₂,
**caractérisé en ce que** le dispositif est conçu pour produire et délivrer la neige de CO₂ en tranches d'une quantité prédéterminée avec une fréquence prédéterminée.

8. Dispositif selon la revendication 7, **caractérisé en outre**
**par** une enceinte essentiellement fermée avec un espace intérieur essentiellement cylindrique ainsi qu'avec une ouverture d'entrée et une ouverture de sortie, qui sont disposées dans une paroi de l'enceinte, en différents endroits en regardant en direction périphérique, dans lequel l'ouverture d'entrée est raccordée à la conduite d'arrivée pour le CO₂ liquide et l'ouverture de sortie est raccordée à la conduite d'évacuation pour la neige de CO₂, et
par un tambour tournant dans l'enceinte avec plusieurs chambres d'expansion séparées les unes des autres, réparties le long de sa périphérie, dans lequel chaque chambre d'expansion communique avec l'ouverture d'entrée et avec l'ouverture de sortie au cours d'une révolution,
dans lequel les chambres d'expansion sont séparées les unes des autres dans la direction périphérique par un nombre correspondant de parois intermédiaires s'étendant radialement et en direction axiale, dans lequel les parois intermédiaires sont disposées de préférence sur un moyeu et/ou sont maintenues ou guidées dans leur position par une structure portante.

9. Dispositif selon la revendication 8, **caractérisé en outre par** un entraînement extérieur pour le tambour, dans lequel la vitesse de rotation de l'entraînement peut être prédéterminée de façon fixe ou peut être réglée en cours de fonctionnement.

10. Dispositif selon la revendication 9, **caractérisé en ce que** le tambour est monté en alignement avec l'axe de l'espace intérieur cylindrique de l'enceinte.

11. Dispositif selon l'une quelconque des revendications 8 ou 9, **caractérisé en ce que** les chambres d'expansion présentent un volume variable, de telle manière que le volume augmente et ensuite diminue de nouveau depuis l'ouverture d'entrée jusqu'à l'ouverture de sortie.

12. Dispositif selon la revendication 11, **caractérisé en ce que** le tambour présente un moyeu, dont l'axe est décalé parallèlement à l'axe de l'espace intérieur cylindrique de l'enceinte en direction de l'ouverture d'entrée, et **en ce que** les parois intermédiaires sont logées dans des rainures longitudinales, qui sont réparties sur la périphérie du moyeu, de telle manière qu'elles soient mobiles radialement, dans lequel les parois intermédiaires sont de préférence précontraintes vers l'extérieur.

13. Dispositif selon la revendication 12, **caractérisé en ce qu'**il se trouve le long de la face intérieure cylindrique de l'enceinte un accessoire de glissement, de préférence calé en rotation, qui présente une surface intérieure lisse par rapport à la face intérieure de l'enceinte, le long de laquelle les parois intermédiaires coulissent.

14. Dispositif selon la revendication 11, **caractérisé en ce qu'**au moins une face frontale de chaque chambre d'expansion est définie par un segment de disque logé entre deux parois intermédiaires,
dans lequel le segment de disque est monté de façon librement mobile axialement sur le côté radialement intérieur et est guidé, sur le côté radialement extérieur, dans la rainure annulaire formée dans la paroi intérieure cylindrique de l'enceinte et commune pour les segments de disque d'un premier côté de toutes les chambres d'expansion, et
dans lequel un plan de guidage de la rainure annulaire présente, par rapport à un plan perpendiculaire à l'axe de l'espace intérieur cylindrique de l'enceinte, un angle tel que la chambre d'expansion présente, au cours de sa révolution, une largeur axiale plus faible à hauteur de l'ouverture d'entrée qu'à hauteur de l'ouverture de sortie.

15. Dispositif selon la revendication 14, **caractérisé en ce que** les deux faces frontales des chambres d'expansion sont formées respectivement par un segment de disque et il est prévu deux rainures annulaires, dans lesquelles les segments de disque d'une face frontale sont respectivement guidés, dans lequel les rainures annulaires présentent une distance axiale plus faible à hauteur de l'ouverture d'entrée qu'à hauteur de l'ouverture de sortie.

16. Dispositif selon la revendication 14 ou 15, **caractérisé en ce qu'**il est prévu dans les rainures annulaires respectivement une bague de glissement de section transversale concave, dans laquelle glissent les segments de paroi latérale.

17. Dispositif selon l'une quelconque des revendications 14 à 16, **caractérisé en ce que** les segments de disque sont montés de façon mobile axialement sur le côté radialement intérieur au moyen de rainures longitudinales ou le long de surélévations s'étendant longitudinalement, qui sont réalisées dans ou sur la surface d'un moyeu, sur lequel les parois intermédiaires sont disposées ou avec lequel elles sont réalisées d'une seule pièce, ou qui sont réalisées dans ou sur les parois intermédiaires elles-mêmes.

18. Dispositif selon l'une quelconque des revendications 7 à 17, **caractérisé en outre par** un dispositif de soufflage pour insuffler un gaz sous pression, en particulier du CO₂ ou de l'air comprimé, dans les chambres d'expansion à l'endroit de l'ouverture de sortie ou en un point ultérieur dans le sens de rotation du tambour.

19. Dispositif de nettoyage de surfaces au moyen de glace sèche, comprenant:
- un dispositif pour produire de la glace sèche;
- un dispositif pour introduire la glace sèche dans un courant de gaz porteur;
- un dispositif pour fournir le courant de gaz porteur avec la glace sèche à une tuyère, en particulier à une tuyère de Laval, et à une ouverture de projection; et
- un dispositif pour orienter le jet quittant l'ouverture de projection vers la surface à nettoyer, dans lequel le jet est de préférence déplacé au-dessus de la surface,
**caractérisé en ce que** le dispositif pour produire la glace sèche est construit selon l'une quelconque des revendications 7 à 18.

20. Dispositif selon la revendication 19, dans la mesure où elle est rattachée à la revendication 9, **caractérisé en ce que** l'entraînement extérieur est un moteur à gaz, qui est entraîné de préférence par une partie du gaz porteur.
